# EUROPÄISCHE PATENTSCHRIFT

(11) **EP 3 762 743 B1**
(45) Veröffentlichungstag und Bekanntmachung des Hinweises auf die Patenterteilung: **07.06.2023**
(21) Anmeldenummer: 19707267.1
(22) Anmeldetag: 21.02.2019
(51) Int. Cl.: G01S 17/931, G01S 17/42, G01S 17/89, G01S 17/93, G05D 1/02

(54) **VERFAHREN ZUM BETREIBEN EINER ANLAGE**
METHOD FOR OPERATING A SYSTEM
PROCÉDÉ POUR FAIRE FONCTIONNER UNE INSTALLATION

(30) Priorität: 08.03.2018 DE 102018001901
(43) Veröffentlichungstag der Anmeldung: 13.01.2021
(73) Patentinhaber: SEW-EURODRIVE GmbH & Co. KG, 76646 Bruchsal (DE)
(72) Erfinder: SLISKOVIC, Maja, 76275 Ettlingen (DE); SCHMIDT, Josef, 76676 Graben-Neudorf (DE); MALLIK, Quamrul, Hasan, 76139 Karlsruhe (DE); ORTMANN, Andre, 59872 Eversberg (DE)
(86) Internationale Anmeldenummer: PCT/EP2019/025047
(87) Internationale Veröffentlichungsnummer: WO 2019/170292

(56) Entgegenhaltungen:
- EP-A2- 1 288 677
- DE-A1-102016 212 734
- DE-B3-102015 207 978
- US-A1- 2010 211 244

## Beschreibung

Die Erfindung betrifft ein Verfahren zum Betreiben einer Anlage.

Es ist allgemein bekannt, dass Laserscanner auf die Position des Laserscanners bezogen den Abstand und die Richtung von Objekten bestimmbar machen.

**Aus der Veröffentlichung** MORAS, Julien: Credibilist occupancy grids for vehicle perception in dynamic enviroments. In: 2011 IEEE international conference on robotics and automation, 9- 13 May 2011, Shanghai, China, S. 84 - 89 - ISBN 978-1-61284-386-5 **ist als nächstliegender Stand der Technik ist ein Mobilteil mit Lidar-Sensor bekannt.**

**Aus der** WO 2017/054 965 A1 **ist ein Verfahren zur Charakterisierung von Objekten bekannt.**

**Aus der** DE 10 2013 211 414 A1 **ist ein fahrerloses Transportfahrzeug bekannt.**

**Aus der** DE 10 2016 212 734 A1 **ist als nächstliegender Stand der Technik eine**

**Steuervorrichtung zur Erfassung der Umgebung eines Fahrzeugs bekannt.**

Der Erfindung liegt daher die Aufgabe zugrunde, das Verfahren weiterzubilden, wobei eine optimierte Sollwegplanung für Fahrzeuge ausführbar sein soll.

Erfindungsgemäß wird die Aufgabe bei dem Verfahren nach den in Anspruch 1 angegebenen Merkmalen gelöst.

Wesentliche Merkmale der Erfindung bei dem Verfahren zum Betreiben einer Anlage mit zumindest einem auf einer Verfahrfläche der Anlage verfahrbarem Mobilteil und stationären, insbesondere also unbeweglichen, und bewegbaren Objekten, sind unter anderem, dass das Mobilteil zumindest einen als Laserscanner ausgeführten Sensor aufweist, welcher mit einer Steuerung des Mobilteils verbunden ist,
wobei das Mobilteil mittels eines Positionsbestimmungsmittels seine Position in der Anlage bestimmt,
wobei mittels des Sensors zeitlich nacheinander Objekte der Anlage erfasst werden, wobei bei jeder Erfassung, insbesondere Laserscan, die auf das Mobilteil bezogene relativen Positionen, insbesondere Entfernung und Richtung, der Objekte bestimmt werden und unter Berücksichtigung der jeweiligen Position des Mobilteils in der Anlage die absolute Position der Objekte in der Anlage bestimmt werden,
wobei in der einen Speicher aufweisenden Steuerung des Mobilteils Ringspeicher vorhanden sind,
wobei jeder Ringspeicher N Speicherplätze aufweist und jeder Ringspeicher einer jeweiligen Zelle einer Menge von Zellen, insbesondere Flächenzellen, insbesondere eineindeutig zugeordnet ist,
wobei die Zellen aneinander berührend angeordnet, aber nicht überlappend angeordnet sind,
wobei die Zellen zur Bildung eines Kartenabbilds der Anlage vorgesehen sind, insbesondere wobei die N Speicherplätz in einer aufsteigenden Reihenfolge vom ersten Speicherplatz zum N-ten Speicherplatz angeordnet sind und der erste Speicherplatz dem N-ten Speicherplatz nachfolgt,
wobei bei jeder Erfassung einem jeweils, insbesondere in Richtung der Reihenfolge,
nächsten Speicherplatz des Ringspeichers einer jeweiligen Zelle ein Status der Zelle und der zur Erfassung zugehörige Zeitpunkt der Erfassung zugeordnet wird,
wobei zeitlich wiederkehrend der Wert einer Fensterfunktion bestimmt wird,
woraus
   - das Vorhandensein eines stationären Objekts zu einem Zeitpunkt
   - das Vorhandensein eines bewegbaren Objekts zu einem Zeitpunkt oder
   - das Nicht-Vorhandensein eines Objekts zu einem Zeitpunkt geschlussfolgert wird,
wobei ein vom Mobilteil zu fahrender Sollweg unter Berücksichtigung der geschlussfolgerten Information, also unter Berücksichtigung der stationären Objekte, bestimmt wird.

Von Vorteil ist dabei, dass eine einfache Bestimmung von Objekten ermöglicht ist. insbesondere ist sogar die Art der Objekte bestimmbar. Somit ist dann eine optimierte Sollwegplanung für das Mobilteil ausführbar. Dabei ist der Laserscanner als Sensor einsetzbar, welcher aber gleichzeitig als Sicherheitssensor fungiert, also bei dem Mobilteil zu nahekommenden Objekten, wie Menschen oder andere Mobilteile, erkannt werden und eine Verlangsamung, ein Stoppen und/oder eine Sollwegänderung ausgelöst wird.

Bei einer vorteilhaften Ausgestaltung wird bei der jeweiligen Erfassung der Status der jeweiligen Zelle mittels
- der Zahl 1 dargestellt, wenn die Zelle belegt ist,
- der Zahl 0 dargestellt, wenn die Zelle frei ist,
- der Zahl -1 dargestellt, wenn die Zelle vom Sensor bei dieser jeweiligen Erfassung nicht beobachtbar ist.

Von Vorteil ist dabei, dass eine einfache Bestimmung ermöglicht ist.

Bei einer vorteilhaften Ausgestaltung wird bei der jeweiligen Erfassung der Status der jeweiligen Zelle mittels
- der Zahl 1 dargestellt, wenn ein bei der Erfassung verwendeter Messstrahl einen Kernbereich der Zelle trifft und dort die Zelle belegt ist
- der Zahl 0,5 dargestellt, wenn der Messstrahl einen Randbereich der Zelle trifft und dort die Zelle belegt ist, wobei dann die dem Randbereich nächstbenachbarte Zelle ebenfalls mindestens den Wert 0,5 zugeordnet bekommt,
- der Zahl 0 dargestellt, wenn der Randbereich und der Kernbereich der Zelle frei ist,
- der Zahl -1 dargestellt, wenn die Zelle vom Sensor bei dieser jeweiligen Erfassung nicht beobachtbar ist.

Von Vorteil ist dabei, dass eine einfache Bestimmung und ein vermindertes Messrauschen erreichbar ist, insbesondere durch Vermindern desjenigen Messrauschens, welches durch Messwerte im Berührbereich der Zellen verursacht wird.

Bei einer vorteilhaften Ausgestaltung wird bei der jeweiligen Erfassung der Status der jeweiligen Zelle mittels
- eines, insbesondere zwischen 0 und 1 liegenden, Zahlenwerts dargestellt, der vom Abstand des erfassten Reflexionspunktes des Laserstrahls zu einem Randbereich der Zelle abhängt, wobei die zum Reflexionspunkt nächstbenachbarte Zelle zumindest die Differenz zwischen dem Zahlenwert und einem Maximalwert, insbesondere dem Wert 1, zugeordnet bekommt,
- mittels der Zahl 0 dargestellt, wenn der Bereich der Zelle frei ist,
- mittels der Zahl -1 dargestellt, wenn die Zelle vom Sensor bei dieser jeweiligen Erfassung nicht beobachtbar ist.

Von Vorteil ist dabei, dass eine einfache Bestimmung und ein vermindertes Messrauschen erreichbar ist, insbesondere durch Vermindern desjenigen Messrauschens, welches durch Messwerte im Berührbereich der Zellen verursacht wird.

Bei einer vorteilhaften Ausgestaltung wird eine normierte Fensterfunktion als Quotient aus der Fensterfunktion und der Summe der Gewichtsfaktoren aller Speicherplätze eines jeweiligen Ringspeichers bestimmt wird. Von Vorteil ist dabei, dass mittels Normierung der Fensterfunktion zur Erkennung eines Objekts ein Schwellwert überschritten wird, der unabhängig von der Wahl der Gewichtsfaktoren ist

Bei einer vorteilhaften Ausgestaltung weist ein Teil der dem jeweiligen Ringspeicher zugeordneten Gewichtsfaktoren Null auf und der restliche Teil der dem jeweiligen Ringspeicher zugeordneten Gewichtsfaktoren unterscheidet sich von Null, insbesondere weist den Zahlenwert 1 auf. Von Vorteil ist dabei, dass nicht nur stationäre, sondern auch schnell bewegliche Objekte erkennbar sind, wenn der restliche Teil kurz gewählt wird.

Bei einer vorteilhaften Ausgestaltung wird eine erste und eine zweite normierte Fensterfunktion bestimmt,
wobei der restliche Teil der zweiten Fensterfunktion mehr Speicherplätze aufweist als der restliche Teil der ersten Fensterfunktion,
insbesondere wobei der restliche Teil der zweiten Fensterfunktion alle Speicherplätze aufweist und der andere Teil verschwindet,
wobei auf
   - das Vorhandensein eines stationären Objekts zu einem Zeitpunkt geschlussfolgert wird, wenn die erste und die zweite normierte Fensterfunktion beide jeweils einen Schwellwert überschreiten,
   - das Vorhandensein eines bewegbaren Objekts zu einem Zeitpunkt geschlussfolgert wird, wenn die erste normierte Fensterfunktion den Schwellwert überschreitet und die zweite normierte Fensterfunktion den Schwellwert nicht überschreitet,
   - das Nicht-Vorhandensein eines Objekts zu einem Zeitpunkt geschlussfolgert wird, wenn die erste und die zweite normierte Fensterfunktion beide jeweils den Schwellwert nicht überschreiten.

Von Vorteil ist dabei, dass eine einfache Bestimmung ermöglicht ist.

Bei einer vorteilhaften Ausgestaltung werden dem Mobilteil bei von einem oder mehreren weiteren Mobilteilen durchgeführten Erfassungen ermittelte Status und Zeitpunkte über einen Kommunikationskanal mitgeteilt,
insbesondere wobei die Steuerungen aller Mobilteile mittels des insbesondere nicht leitungsgebundenen Kommunikationskanals zum Datenaustausch verbunden sind. Von Vorteil ist dabei, dass eine Zusammenarbeit und gegenseitige Unterstützung bei der Datenbeschaffung ausführbar ist.

Bei einer vorteilhaften Ausgestaltung wird als Positionsbestimmungsmittel ebenfalls die Steuerung und der Sensor verwendet, indem die bei einer Erfassung bestimmten relativen Positionen der bei der Erfassung detektierten Objekte verglichen werden mit den auf eine vermutete Position in der Anlage bezogenen relativen Positionen der gemäß der Karte bekannten Objekte,

insbesondere wobei die vermutete Position derart verändert wird, bis der Vergleich eine genügend gute Übereinstimmung ergibt und somit die vermutete Position als Position des Mobilteils bestimmt wird. Von Vorteil ist dabei, dass anhand der Karten Daten eine Positionsbestimmung ausführbar ist. Somit muss keine separate Positionsbestimmungsmitte, wie GPS-System oder ein Erkennen von in der Anlage verteilt angeordneten Positionsmarkierungen mittels einer Kamera des jeweiligen Mobilteils, vorgesehen werden.

Wesentliche Merkmale der Anlage mit Mobilteil sind, dass auf deren Steuerung ein vorgenanntes Verfahren ausgeführt wird.

Von Vorteil ist dabei, dass in jedem Mobilteil eine Karte mit aktualisierter Information über den Standort von beweglichen Objekten und Mobilteilen vorhanden ist. Somit ist eine verbesserte Sollwegplanung ausführbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

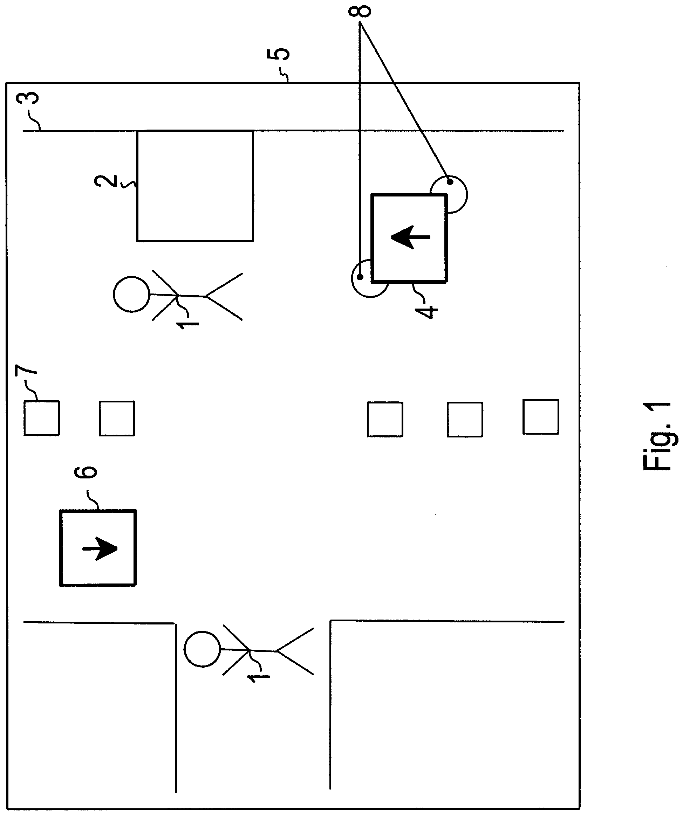

In der Figur 1 ist eine Anlage mit Menschen 1, bewegbarem Objekt 2, stationären Objekten (3, 7) und erstem sowie zweitem Mobilteil (4, 6) dargestellt.

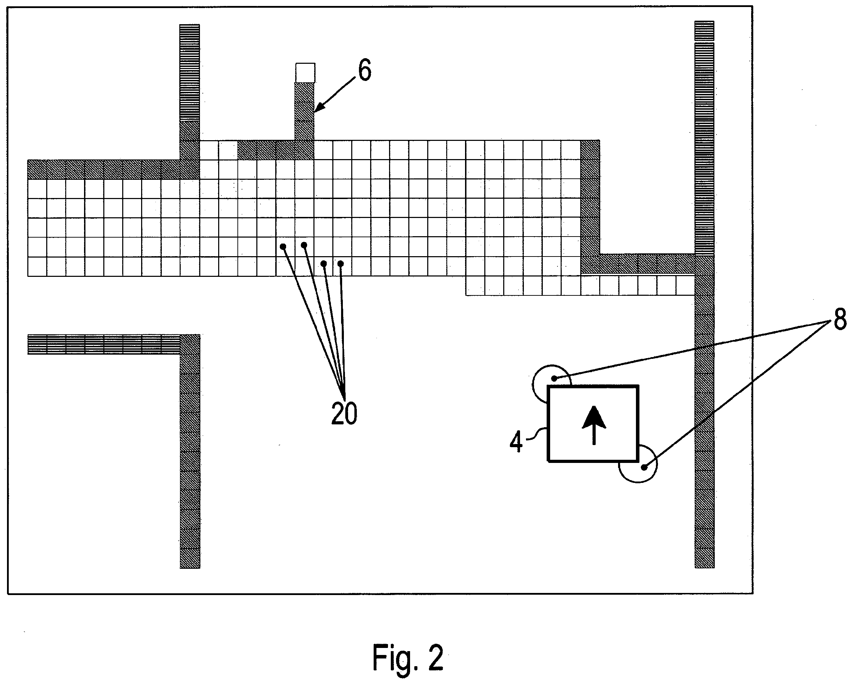

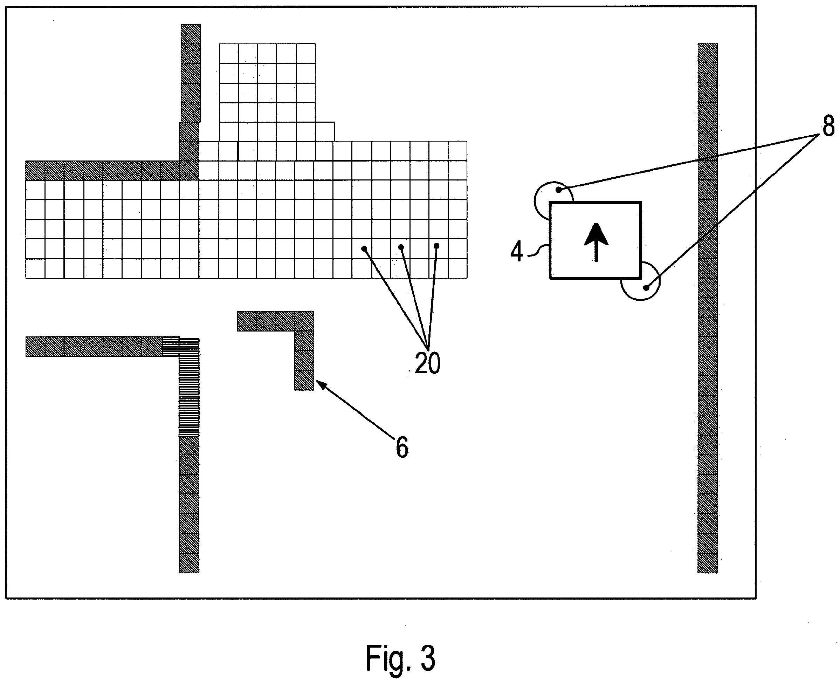

Figur 2 deutet eine Karte der Anlage an, welche vom Mobilteil 4 aus erstellt werden kann.

Wie in der Figur dargestellt, weist die erfindungsgemäße Anlage auf ihrem Boden als Verfahrfläche verfahrbare Mobilteile (4, 6) auf.

Jedes der Mobilteile (4, 6) weist eine Steuerung auf, welche eine Lenkeinheit und einen Antrieb ansteuert, so dass das jeweilige Mobilteil (4, 6) entlang einer Bahn bewegbar ist.

Dabei weist die Steuerung auch einen Speicher auf, in welchem eine Karte der Anlage abspeicherbar ist.

Hierzu wird die in der Karte dargestellte Anlage in einander nicht überlappenden Flächenzellen 20 eingeteilt. Die Flächenzellen 20 sind vorzugsweise aneinander angrenzend vorgesehen, so dass die Anlage lückenlos darstellbar ist. Vorzugsweise sind die Flächenzellen 20 alle gleichartig und gleichgroß.

Die Mobilteile (4, 6) sind über einen Kommunikationskanal miteinander zum Datenaustausch verbunden.

Jedes Mobilteil (4, 6) weist ein Positionsbestimmungssystem auf, welches die Position des jeweiligen Mobilteils (4, 6) bestimmt. Mittels Laserscannern 8 wird die Richtung und Entfernung von vom jeweiligen Laserscanner 8 detektierbaren Gegenständen erfasst, also deren auf das jeweilige Mobilteil (4, 6) bezogenen relative Position. Durch vektorielle Addition der relativen Position zur Position des jeweiligen Mobilteils (4, 6) ist die Position des jeweiligen Gegenstandes bestimmbar, so dass jeder der Zellen 20 bei Detektion eines Gegenstandes, also Objekts, die Daten der Detektion zuordenbar sind. Somit wird also im Speicher des jeweiligen Mobilteils (4, 6) jeweils für die jeweilige Detektion der Status der Zelle mit der zugehörigen Zeit abgespeichert. Der Status ist dabei entweder als belegt, frei oder als nicht beobachtbar gekennzeichnet. Nicht beobachtbar bedeutet dabei, dass die Zelle hinter einem Hindernis angeordnet ist.

Die Zellen auf der Verbindungslinie zwischen dem Laserscanner des Mobilteils (4, 6) und einer jeweils als belegt detektierten Zelle werden mit dem Status frei zum Zeitpunkt der Messung belegt. Die in Verlängerung der Verbindungslinie hinter dem der als belegt detektierten Zelle, also hinter dem Objekt, werden als nicht beobachtbar gekennzeichnet.

Vorteiligerweise wird der Status x einer Zelle bei jeder Detektion durch
- Die Zahl 1 dargestellt, wenn die Zelle belegt ist
- Die Zahl 0 dargestellt, wenn die Zelle frei ist,
- Die Zahl -1 dargestellt, wenn die Zelle nicht beobachtbar ist.

in der Steuerung des Mobilteils (4, 6) ist jeder Zelle 20 ein Ringspeicher zugeordnet, der N Speicherplätze aufweist. Bei jeder nächsten Detektion wird der jeweils nächste Speicherplatz des Ringspeichers mit dem Wert x und der Zeit beschrieben. Nach N+1 Detektionen wird somit ein Speicherplatz überschrieben mit den neuesten Daten.

Zur Bestimmung der Art eines Objekts wird eine Fensterfunktion berechnet, wofür die N Werte x des Ringspeichers mit einem jeweiligen Gewichtsfaktor multipliziert und dann alle so entstandenen Produkte aufsummiert werden.

Die Fensterfunktion f lässt sich daher darstellen als ∑wᵢ * xₙ₋ᵢ, wobei die Summe über alle i von 0 bis N-1 ausgeführt wird, also über alle zeitlich nacheinander gemachten Erfassungen.

Die Gewichtungen wᵢ sind derart gewählt, dass sie in einem ersten Zeitbereich, beispielsweise von i=0 bis i= m, wobei m kleiner als N-1 ist, verschwinden, und in dem restlichen Bereich nicht verschwinden, insbesondere den Wert 1 aufweisen.

Überschreitet die Fensterfunktion f einen Schwellwert, ist ein Objekt in der Zelle im zum restlichen Zeitbereich gehörigen Zeitbereich vorhanden gewesen.

Durch Veränderung von m und auch Verschiebung des ersten Zeitbereichs in Ringspeicherrichtung sind unterschiedlich schnell bewegte Objekte unterscheidbar.

Denn wenn der erste Zeitbereich groß ist, also der restliche Zeitbereich klein, ist bei Erkennen eines im restlichen Zeitbereich auf der Zelle vorhandenen Objekts dann auf ein schnell bewegtes Objekt schließbar, wenn bei kleinerem ersten Zeitbereich kein Objekt erkannt wurde. Denn wenn das Objekt nur für wenige Werte von i, also nur bei wenigen Erfassungen, auf der Zelle detektiert wurde, nicht aber für viele Werte von i, war das Objekt nur kurzzeitig auf der Zelle. Somit ist die Annahme wahrscheinlich, dass dieses Objekt ein schnell bewegtes Objekt war.

Auf diese Weise ist also ein schnell bewegtes von einem langsam bewegten Objekt unterscheidbar.

Außerdem wird die Information über das zu einem Zeitpunkt detektierten Objekts verwendet, um Bewegungspfade des Objekts zu bestimmen. Hierzu ist es vorteilhaft, dass alle Mobilteile 4 (4, 6) die detektierten Informationen einander übermitteln.

Vorteil des erfindungsgemäßen Verfahrens ist also, eine automatische Schätzung ausführbar zu machen, ob ein Bereich mit statischen oder dynamischen Objekten belegt ist. Außerdem ist es ermöglicht, den Zeitpunkt abzuschätzen, wann ein Objekt in der jeweiligen Zelle war oder ob ein Objekt vorhanden ist, obwohl früher an der jeweiligen Zelle kein Objekt vorhanden war.

Mittels Erkennung der beweglichen Objekte ist die automatische Erstellung einer Karte ohne bewegliche Objekte ermöglicht. Und somit eine verbesserte Lokalisierung des Mobilteils (4, 6) ausführbar oder auch die Unterscheidung, ob eine geplante Bahn, insbesondere ein Weg, infolge von dort angeordneten stationären oder beweglichen Objekten blockiert ist.

Bei weiteren erfindungsgemäßen Ausführungsbeispielen wird der Status x einer Zelle bei jeder Detektion durch
- Die Zahl 1 dargestellt, wenn der Messstrahl einen Kernbereich der Zelle trifft und dort die Zelle belegt ist
- Die Zahl 0,5 dargestellt, wenn der Messstrahl einen Randbereich der Zelle trifft und dort die Zelle belegt ist, wobei dann die dem Randbereich benachbarte Zelle ebenfalls mindestens den Wert 0,5 zugeordnet bekommt.
- Die Zahl 0 dargestellt, wenn der Randbereich und der Kernbereich der Zelle frei ist,
- Die Zahl -1 dargestellt, wenn die Zelle nicht beobachtbar ist.

Somit sind auch Werte zwischen 0 und 1 bei belegter Zelle anwendbar Auf diese Weise ist der Einfluss des Rauschens in den Messwerten reduzierbar.

Bei weiteren erfindungsgemäßen Ausführungsbeispielen wird der Status x einer Zelle bei jeder Detektion durch
- Wenn ein Objekt im Bereich der Zelle detektiert wird, einen Zahlenwert zwischen 0 und 1, der vom Abstand des erfassten Reflexionspunktes des Laserstrahls zu einem Randbereich der Zelle abhängt, wobei die zum Reflexionspunkt nächstbenachbarte Zelle zumindest die Differenz zwischen dem Zahlenwert und dem Wert 1 zugeordnet bekommt.
- Die Zahl 0 dargestellt, wenn der Bereich der Zelle frei ist,
- Die Zahl -1 dargestellt, wenn die Zelle nicht beobachtbar ist.

Auf diese Weise ist der Einfluss des Rauschens in den Messwerten weiter reduzierbar.

Bei weiteren erfindungsgemäßen Ausführungsbeispielen bestimmt jedes Mobilteil (4, 6) seine eigene Position, indem die stationären Objekte bestimmt werden, also diejenigen Zellen, bei welchen die Fensterfunktion den Maximalwert erreicht, wenn alle Gewichtsfaktoren gleich groß, insbesondere gleich Eins gewählt sind. Des Weiteren werden verschiedene vermutete Positionen des Mobilteils (4, 6) jeweils verwendet, um den letzten Laserscan zu vergleichen mit dem sich aus der Karte bei Verwendung der jeweils vermuteten Position ergebenden theoretischen Scan. Bei einer ausreichend guten Übereinstimmung der theoretischen Messwerte mit den erfassten Messwerten wird die vermutete Position als tatsächliche Position verwendet.

Bei weiteren erfindungsgemäßen Ausführungsbeispielen ist die Verfahrfläche nicht der Boden, sondern eine andere Fläche der Anlage.

### Bezugszeichenliste

1 Mensch
2 bewegbares Objekt
3 stationäres Objekt
4 erstes Mobilteil
5 stationäres Objekt
6 zweites Mobilteil
7 stationäres Objekt
8 Laserscanner
20 Zelle

## Patentansprüche

1. Verfahren zum Betreiben einer Anlage mit zumindest einem auf einer Verfahrfläche der Anlage verfahrbarem Mobilteil und stationären, insbesondere also unbeweglichen, und bewegbaren Objekten,
wobei das Mobilteil zumindest einen **als Laserscanner ausgeführten** Sensor aufweist, welcher mit einer Steuerung des Mobilteils verbunden ist,
wobei das Mobilteil mittels eines Positionsbestimmungsmittels seine Position in der Anlage bestimmt,
wobei mittels des Sensors zeitlich nacheinander Objekte der Anlage erfasst werden, wobei bei jeder Erfassung, **also** Laserscan, die auf das Mobilteil bezogene relativen Positionen, insbesondere Entfernung und Richtung, der Objekte bestimmt werden und unter Berücksichtigung der jeweiligen Position des Mobilteils in der Anlage die absolute Position der Objekte in der Anlage bestimmt werden,
wobei in der einen Speicher aufweisenden Steuerung des Mobilteils Ringspeicher vorhanden sind,
wobei jeder Ringspeicher N Speicherplätze aufweist und jeder Ringspeicher einer jeweiligen Zelle einer Menge von Zellen, insbesondere Flächenzellen, zugeordnet ist,
**wobei die Zellen aneinander berührend angeordnet, aber nicht überlappend angeordnet sind,**
**wobei die Zellen zur Bildung eines Kartenabbilds der Anlage vorgesehen sind,**
insbesondere wobei die N Speicherplätze in einer aufsteigenden Reihenfolge vom ersten Speicherplatz zum N-ten Speicherplatz angeordnet sind und der erste Speicherplatz dem N-ten Speicherplatz nachfolgt,
wobei bei jeder Erfassung einem jeweils, insbesondere in Richtung der Reihenfolge,
nächsten Speicherplatz des Ringspeichers einer jeweiligen Zelle ein Status der Zelle und der zur Erfassung zugehörige Zeitpunkt der Erfassung zugeordnet wird,
wobei zeitlich wiederkehrend der Wert einer Fensterfunktion bestimmt wird,
woraus
- das Vorhandensein eines stationären Objekts zu einem Zeitpunkt
- das Vorhandensein eines bewegbaren Objekts zu einem Zeitpunkt oder
- das Nicht-Vorhandensein eines Objekts zu einem Zeitpunkt
geschlussfolgert wird,
**wobei ein vom Mobilteil zu fahrender Sollweg unter Berücksichtigung der**
**geschlussfolgerten Information, also unter Berücksichtigung der stationären Objekte, bestimmt wird,**
**wobei zur Bestimmung der Art eines Objekts die Fensterfunktion als Summe ∑wᵢ * xₙ₋ᵢ**
**gebildet wird, indem die N Werte x des Ringspeichers mit einem jeweiligen Gewichtsfaktor wᵢ multipliziert und dann alle so entstandenen Produkte aufsummiert werden,**
**wobei die Summe über alle i von 0 bis N-1 ausgeführt wird, also über alle zeitlich nacheinander gemachten Erfassungen,**
**wobei die Gewichtungen wᵢ derart gewählt sind, dass sie in einem ersten Zeitbereich, verschwinden, und in dem restlichen Bereich nicht verschwinden,**
**so, dass die Fensterfunktion f einen Schwellwert dann überschreitet, wenn ein Objekt in der Zelle im zum restlichen Zeitbereich gehörigen Zeitbereich vorhanden gewesen ist.**

2. Verfahren nach Anspruch 1,
**dadurch gekennzeichnet, dass**
bei der jeweiligen Erfassung der Status der jeweiligen Zelle mittels
- der Zahl 1 dargestellt wird, wenn die Zelle belegt ist,
- der Zahl 0 dargestellt wird, wenn die Zelle frei ist,
- der Zahl -1 dargestellt wird, wenn die Zelle vom Sensor bei dieser jeweiligen Erfassung nicht beobachtbar ist.

3. Verfahren nach Anspruch 1,
**dadurch gekennzeichnet, dass**
bei der jeweiligen Erfassung der Status der jeweiligen Zelle mittels
- der Zahl 1 dargestellt wird, wenn ein bei der Erfassung verwendeter Messstrahl einen Kernbereich der Zelle trifft und dort die Zelle belegt ist
- der Zahl 0,5 dargestellt wird, wenn der Messstrahl einen Randbereich der Zelle trifft und dort die Zelle belegt ist, wobei dann die dem Randbereich nächstbenachbarte Zelle ebenfalls mindestens den Wert 0,5 zugeordnet bekommt,
- der Zahl 0 dargestellt wird, wenn der Randbereich und der Kernbereich der Zelle frei sind,
- der Zahl -1 dargestellt wird, wenn die Zelle vom Sensor bei dieser jeweiligen Erfassung nicht beobachtbar ist.

4. Verfahren nach Anspruch 1,
**dadurch gekennzeichnet, dass**
bei der jeweiligen Erfassung der Status der jeweiligen Zelle mittels
- eines, insbesondere zwischen 0 und 1 liegenden, Zahlenwerts dargestellt wird, der vom Abstand des erfassten Reflexionspunktes des Laserstrahls zu einem Randbereich der Zelle abhängt, wobei die zum Reflexionspunkt nächstbenachbarte Zelle zumindest die Differenz zwischen dem Zahlenwert und einem Maximalwert, insbesondere dem Wert 1, zugeordnet bekommt,
- mittels der Zahl 0 dargestellt wird, wenn der Bereich der Zelle frei ist,
- mittels der Zahl -1 dargestellt wird, wenn die Zelle vom Sensor bei dieser jeweiligen Erfassung nicht beobachtbar ist.

5. Verfahren nach mindestens einem der vorangegangenen Ansprüche,
**dadurch gekennzeichnet, dass** eine normierte Fensterfunktion als Quotient aus der Fensterfunktion und
der Summe der Gewichtsfaktoren aller Speicherplätze eines jeweiligen Ringspeichers bestimmt wird.

6. Verfahren nach mindestens einem der vorangegangenen Ansprüche,
**dadurch gekennzeichnet, dass**
ein Teil der dem jeweiligen Ringspeicher zugeordneten Gewichtsfaktoren Null ist und der restliche Teil der dem jeweiligen Ringspeicher zugeordneten Gewichtsfaktoren sich unterscheidet von Null, insbesondere den Zahlenwert 1 aufweist.

7. Verfahren nach Anspruch 6,
**dadurch gekennzeichnet, dass**
eine erste und eine zweite normierte Fensterfunktion bestimmt wird,
wobei der restliche Teil der zweiten Fensterfunktion mehr Speicherplätze aufweist als der restliche Teil der ersten Fensterfunktion,
insbesondere wobei der restliche Teil der zweiten Fensterfunktion alle Speicherplätze aufweist und der andere Teil verschwindet,
wobei auf
- das Vorhandensein eines stationären Objekts zu einem Zeitpunkt geschlussfolgert wird, wenn die erste und die zweite normierte Fensterfunktion beide jeweils einen Schwellwert überschreiten,
- das Vorhandensein eines bewegbaren Objekts zu einem Zeitpunkt geschlussfolgert wird, wenn die erste normierte Fensterfunktion den Schwellwert überschreitet und die zweite normierte Fensterfunktion den Schwellwert nicht überschreitet,
- das Nicht-Vorhandensein eines Objekts zu einem Zeitpunkt geschlussfolgert wird, wenn die erste und die zweite normierte Fensterfunktion beide jeweils den Schwellwert nicht überschreiten.

8. Verfahren nach mindestens einem der vorangegangenen Ansprüche,
**dadurch gekennzeichnet, dass**
dem Mobilteil bei von einem oder mehreren weiteren Mobilteilen durchgeführten Erfassungen ermittelte Status und Zeitpunkte über einen Kommunikationskanal mitgeteilt werden, insbesondere wobei die Steuerungen aller Mobilteile mittels des insbesondere nicht leitungsgebundenen Kommunikationskanals zum Datenaustausch verbunden sind.

9. Verfahren nach mindestens einem der vorangegangenen Ansprüche,
**dadurch gekennzeichnet, dass**
als Positionsbestimmungsmittel ebenfalls die Steuerung und der Sensor verwendet wird, indem die bei einer Erfassung bestimmten relativen Positionen der bei der Erfassung detektierten Objekte verglichen werden mit den auf eine vermutete Position in der Anlage bezogenen relativen Positionen der gemäß der Karte bekannten Objekte,
insbesondere wobei die vermutete Position derart verändert wird, bis der Vergleich eine genügend gute Übereinstimmung ergibt und somit die vermutete Position als Position des Mobilteils bestimmt wird.

10. Anlage mit Mobilteil, auf deren Steuerung ein Verfahren nach mindestens einem der vorangegangenen Ansprüche ausgeführt wird.

## Claims

1. Method for operating a facility comprising at least one mobile component, which can travel on a travel surface of the facility, and comprising stationary, that is, in particular non-moving, and movable objects,
wherein the mobile component has at least one sensor configured as a laser scanner and connected to a controller of the mobile component,
wherein the mobile component determines its position in the facility using a position determination means,
wherein objects of the facility are sensed successively over time by means of the sensor, wherein, in each sensing, that is, laser scan, the relative positions, in particular distance and direction, of the objects in relation to the mobile component are determined, and the absolute position of the objects in the facility is determined by taking into account the particular position of the mobile component in the facility,
wherein circular buffers are present in the controller of the mobile component, which controller has a storage device,
wherein each circular buffer has N storage locations, and each circular buffer is assigned to a particular cell of a quantity of cells, in particular areal cells,
wherein the cells are arranged in contact with one another but are arranged in a nonoverlapping manner,
wherein the cells are intended for creating a map image of the facility,
in particular wherein the N storage locations are arranged in an ascending sequence from the first storage location to the Nth storage location, and the first storage location comes after the Nth storage location,
wherein, in each sensing, a subsequent storage location of the circular buffer of a particular cell, in particular a subsequent storage location in the direction of the sequence, is assigned a status of the cell and the sensing time associated with the sensing,
wherein the value of a window function is determined recurrently over time,
it being concluded therefrom that
- a stationary object is present at a time
- a movable object is present at a time or
- no object is present at a time,
wherein a target path to be travelled by the mobile component is determined by taking into account the concluded information, that is, by taking into account the stationary objects,
wherein, to determine the type of an object, the window function is formed as the sum ∑wᵢ * xₙ₋ᵢ by multiplying the N values x of the circular buffer by a particular weighting coefficient wᵢ and then adding together all the resulting products,
wherein the sum is executed over all i from 0 to N-1, that is, over all the sensings carried out successively over time,
wherein the weightings wᵢ are selected such that they vanish in a first time range and do not vanish in the remaining range, such that the window function f exceeds a threshold value when an object has been present in the cell in the time range associated with the remaining time range.

2. Method according to claim 1,
**characterised in that**
in each sensing, the status of each cell is depicted using
- the number 1 if the cell is occupied,
- the number 0 if the cell is empty,
- the number -1 if the cell cannot be observed by the sensor **in that** particular sensing.

3. Method according to claim 1,
**characterised in that**
in each sensing, the status of each cell is depicted using
- the number 1 if a measurement beam used in the sensing impinges on a core region of the cell and the cell is occupied therein,
- the number 0.5 if the measurement beam impinges on an edge region of the cell and the cell is occupied therein, the cell closest to the edge region then likewise being assigned at least the value 0.5,
- the number 0 if the edge region and the core region of the cell are empty,
- the number -1 if the cell cannot be observed by the sensor **in that** particular sensing.

4. Method according to claim 1,
**characterised in that**
in each sensing, the status of each cell is depicted using
- a numerical value, in particular between 0 and 1, that is dependent on the distance from the sensed reflection point of the laser beam to an edge region of the cell, the cell closest to the reflection point being assigned at least the difference between the numerical value and a maximum value, in particular the value 1,
- the number 0 if the region of the cell is empty,
- the number -1 if the cell cannot be observed by the sensor **in that** particular sensing.

5. Method according to at least one of the preceding claims,
**characterised in that**
a normalised window function is determined as the quotient of the window function and the sum of the weighting coefficients of all the storage locations of a particular circular buffer.

6. Method according to at least one of the preceding claims,
**characterised in that**
one portion of the weighting coefficients assigned to the particular circular buffer is zero and the remaining portion of the weighting coefficients assigned to the particular circular buffer differs from zero, in particular has the numerical value 1.

7. Method according to claim 6,
**characterised in that**
a first and a second normalised window function are determined,
the remaining portion of the second window function having more storage locations than the remaining portion of the first window function,
the remaining portion of the second window function in particular having all the storage locations and the other portion vanishing,
wherein it is concluded that
- a stationary object is present at a time if both the first and second normalised window functions each exceed a threshold value,
- a movable object is present at a time if the first normalised window function exceeds the threshold value and the second normalised window function does not exceed the threshold value,
- no object is present at a time if neither the first nor the second normalised window function exceeds the threshold value in each case.

8. Method according to at least one of the preceding claims,
**characterised in that**
the mobile component is notified, via a communication channel, of the status and times ascertained in sensings carried out by one or more further mobile components, the controllers of all the mobile components in particular being connected for data exchange by means of the communication channel, which in particular is not a wired communication channel.

9. Method according to at least one of the preceding claims,
**characterised in that**
the controller and the sensor are likewise used as the position determination means by the relative positions, determined in a sensing, of the objects detected in the sensing being compared with the relative positions, in relation to a presumed position in the facility, of the objects known in accordance with the map,
the presumed position in particular being changed until such a point as the comparison yields an adequate correlation and thus the presumed position is determined as the position of the mobile component.

10. Facility comprising a mobile component upon the control of which a method according to at least one of the preceding claims is carried out.

## Revendications

1. Procédé d'exploitation d'une installation comprenant au moins une partie mobile apte à se déplacer sur une surface de déplacement de l'installation, et des objets respectivement mobiles et fixes, c'est-à-dire notamment stationnaires,
laquelle partie mobile comporte au moins un capteur réalisé sous la forme d'un scanneur à laser raccordé à une commande de ladite partie mobile,
ladite partie mobile déterminant son emplacement, dans l'installation, à l'aide d'un moyen de détermination d'emplacements,
des objets de l'installation étant détectés avec succession dans le temps au moyen dudit capteur, sachant que les emplacements relatifs se rapportant à la partie mobile, en particulier l'éloignement et la direction desdits objets, sont déterminés lors de chaque détection, c'est-à-dire de chaque balayage laser, et l'emplacement absolu desdits objets, dans l'installation, est déterminé avec prise en compte de l'emplacement respectif de ladite partie mobile dans l'installation,
des mémoires annulaires étant présentes dans la commande de la partie mobile, dotée d'une mémoire,
sachant que chaque mémoire annulaire compte N espaces de stockage, et que chaque mémoire annulaire est affectée à une cellule respective d'un ensemble de cellules, en particulier des cellules de surface,
lesquelles cellules sont placées en contact les unes avec les autres, sans toutefois se chevaucher,
lesdites cellules étant prévues pour former une reproduction cartographiée de l'installation,
sachant notamment que les N espaces de stockage sont agencés en un ordre séquentiel croissant du premier espace de stockage au Nième espace de stockage, et que ledit premier espace de stockage succède audit Nième espace de stockage,
sachant que, lors de chaque détection, un statut de la cellule et l'instant de détection associé à ladite détection sont affectés à un espace de stockage respectif de la mémoire annulaire d'une cellule considérée, notamment successif dans la direction de l'ordre séquentiel,
la valeur d'une fonction de fenêtre étant déterminée avec réitération dans le temps, d'où est déduite
- la présence d'un objet fixe, à un instant,
- la présence d'un objet mobile, à un instant, ou
- la non-présence d'un objet, à un instant,
un trajet de consigne, devant être parcouru par la partie mobile, étant alors déterminé avec prise en compte de l'information déduite, c'est-à-dire avec prise en compte des objets fixes,
sachant que, pour déterminer la nature d'un objet, la fonction de fenêtre est formée en tant que somme Σ wᵢ * Xₙ₋ᵢ, les N valeurs x de la mémoire annulaire étant multipliées par un facteur respectif de pondération wᵢ, et tous les produits ainsi obtenus étant additionnés,
la somme effectuée couvrant tous les i de 0 à N-1, c'est-à-dire toutes les détections accomplies avec succession dans le temps,
les pondérations wᵢ étant choisies de façon telle qu'elles disparaissent dans une première plage temporelle, et ne disparaissent pas dans la plage restante,
de sorte que la fonction de fenêtre f excède une valeur de seuil lorsqu'un objet a été présent, dans la cellule, dans la plage temporelle faisant partie de la plage temporelle restante.

2. Procédé selon la revendication 1,
**caractérisé par le fait que**,
lors de la détection considérée, le statut de la cellule respective est affiché au moyen
- du nombre 1 lorsque la cellule est occupée,
- du nombre 0 lorsque ladite cellule est libre,
- du nombre -1 lorsque ladite cellule ne peut pas être observée par le capteur au cours de cette détection considérée.

3. Procédé selon la revendication 1,
**caractérisé par le fait que**,
lors de la détection considérée, le statut de la cellule respective est affiché au moyen
- du nombre 1 lorsqu'un faisceau mesureur, utilisé au cours de la détection, vient rencontrer une région centrale de la cellule, et ladite cellule est occupée dans cette région,
- du nombre 0,5 lorsque ledit faisceau mesureur vient rencontrer une région marginale de la cellule, et ladite cellule est occupée dans cette région, ensuite de quoi la cellule la plus rapprochée de ladite région marginale se voit également attribuer au moins la valeur 0,5,
- du nombre 0 lorsque ladite région marginale et ladite région centrale de la cellule sont libres,
- du nombre -1 lorsque ladite cellule ne peut pas être observée par le capteur au cours de cette détection considérée.

4. Procédé selon la revendication 1,
**caractérisé par le fait que**,
lors de la détection considérée, le statut de la cellule respective est affiché au moyen
- d'une valeur chiffrée notamment située entre 0 et 1, qui dépend de la distance comprise entre le point de réflexion détecté du faisceau laser et une région marginale de la cellule, sachant que la cellule la plus rapprochée dudit point de réflexion se voit attribuer au moins la différence entre ladite valeur chiffrée et une valeur maximale, en particulier la valeur 1,
- au moyen du nombre 0 lorsque ladite région de la cellule est libre,
- au moyen du nombre -1 lorsque ladite cellule ne peut pas être observée par le capteur au cours de cette détection considérée.

5. Procédé selon au moins l'une des revendications précédentes,
**caractérisé par le fait**
**qu'**une fonction de fenêtre normalisée est déterminée en tant que quotient de ladite fonction de fenêtre et de la somme des facteurs de pondération de tous les espaces de stockage d'une mémoire annulaire considérée.

6. Procédé selon au moins l'une des revendications précédentes,
**caractérisé par le fait**
**qu'**une partie des facteurs de pondération affectés à la mémoire annulaire considérée est nulle, et la partie restante desdits facteurs de pondération, affectés à ladite mémoire annulaire considérée, diffère de zéro et présente notamment la valeur chiffrée 1.

7. Procédé selon la revendication 6,
**caractérisé par le fait que**
des première et seconde fonctions de fenêtre normalisées sont déterminées,
la partie restante de la seconde fonction de fenêtre présentant un plus grand nombre d'espaces de stockage que la partie restante de la première fonction de fenêtre,
sachant notamment que ladite partie restante de la seconde fonction de fenêtre comprend tous les espaces de stockage, et l'autre partie disparaît,
sachant qu'il s'opère une déduction de
- la présence d'un objet fixe, à un instant, lorsque les première et seconde fonctions de fenêtre normalisées excèdent, l'une et l'autre, une valeur de seuil à chaque fois,
- la présence d'un objet mobile, à un instant, lorsque la première fonction de fenêtre normalisée excède la valeur de seuil, et la seconde fonction de fenêtre normalisée n'excède pas ladite valeur de seuil,
- la non-présence d'un objet, à un instant, lorsque lesdites première et seconde fonctions de fenêtre normalisées n'excèdent pas, l'une et l'autre, ladite valeur de seuil à chaque fois.

8. Procédé selon au moins l'une des revendications précédentes,
**caractérisé par le fait que**
des statuts et instants, spécifiés au cours de détections effectuées par une ou plusieurs partie(s) mobile(s) supplémentaire(s), sont communiqués à la partie mobile par l'intermédiaire d'un canal de communication,
sachant, en particulier, que les commandes de toutes les parties mobiles sont connectées, en vue de l'échange de données, au moyen dudit canal de communication notamment non câblé.

9. Procédé selon au moins l'une des revendications précédentes,
**caractérisé par le fait que**
la commande et le capteur sont également utilisés en tant que moyen de détermination d'emplacements, par comparaison des emplacements relatifs des objets détectés lors d'une détection, déterminés au cours de ladite détection, avec les emplacements relatifs des objets connus en conformité avec la carte, rapportés à un emplacement présumé dans l'installation,
sachant notamment que l'emplacement présumé est modifié jusqu'à ce que ladite comparaison révèle une coïncidence suffisamment bonne, et que ledit emplacement présumé soit ainsi déterminé en tant qu'emplacement de la partie mobile.

10. Installation munie d'une partie mobile, pour la commande de laquelle est mis en oeuvre un procédé conforme à au moins l'une des revendications précédentes.
